# EUROPEAN PATENT SPECIFICATION

(11) **EP 0 788 443 B1**
(45) Date of publication and mention of the grant of the patent: **27.03.2002**
(21) Application number: 96930348.6
(22) Date of filing: 29.08.1996
(51) Int. Cl.: B62D 9/02, B60G 21/00

(54) **ANTI-ROLL-OVER SYSTEM FOR THREE OR FOUR-WHEELED MOTOR VEHICLE AND MOTOR VEHICLE COMPRISING SAID ANTI-ROLL SYSTEM**
ANORDNUNG ZUR VEHINDERUNG EINES SEITLICHEN ÜBERSCHLAGS FÜR VIER- ODER DREIRÄDRIGES KRAFTFAHRZEUG UND KRAFTFAHRZEUG MIT DIESER ANORDNUNG
SYSTEME ANTI-RETOURNEMENT POUR VEHICULE A MOTEUR A QUATRE OU TROIS ROUES ET VEHICULE A MOTEUR COMPRENANT CE SYSTEME

(30) Priority: 07.09.1995 IT RM950598
(43) Date of publication of application: 13.08.1997
(73) Proprietor: Infante, Mario, 00146 Roma (IT)
(72) Inventor: Infante, Mario, 00146 Roma (IT)
(74) Representative: Provvisionato, Paolo
(86) International application number: IT9600167
(87) International publication number: WO9709223

(56) References cited:
- EP-A- 0 626 307
- AT-B- 394 694
- GB-A- 775 405
- GB-A- 2 279 047

## Description

### Technical Field

My invention is an important innovation in the field of traffic problems. It helps solve two of the most serious problems of modern cities, that of finding a parking space, that of facing frequent traffic jams. This invention is directed to an anti-roll-over system according to the preamble of claim 1.

### Background Art

These problems are accentuated by the large size of vehicle commonly used. The aim of the present invention is to eliminate, or to reduce, the above mentioned difficulties.

GB-A-2 279 047 discloses a banking suspension for a vehicle having one pair of wheels laterally disposed and which may be banked into comers like a bike. The vehicle's angle of lean is controlled by use of wheel gyroscopic forces. It discloses an anti-roll-over system according to the preamble of claim 1.

GB-A-775 405 discloses a car fitted with body-tilting means, whereby the body may be caused to tilt towards the inside of a curve when the car is rounding bends.

Thanks to the present invention, "Four-wheeled Motor Vehicle with inwardly-inclining means on bends", the users can retain the comfort of driving a car while enjoying the manoeuvrability of a motorcycle.

### Disclosure of invention

The invention is defined in the appended claims.

A first characteristic of this invention is its reduced size, similar to that of a common motorcycle with a medium power engine. The reduced size is obtained by putting the seats (preferably three) in a longitudinal direction, whilst retaining all the comfort and safety for a standard car.

A second characteristic is the built-in anti-rolling system which prevents any possible overturning while travelling at high speed in curves. This anti-rolling system consists of ascending and descending wheels. The anti-rolling system can be powered by any combination of hydraulics, electric, electronics, or electromechanical. The system allows the vehicle to lean to the left and to the right in the same manner as a motorcycle.

This way of leaning is necessary to cope with sharp turns at high speed. The anti-rolling system that is used by "Four-wheeled Motor Vehicle with inwardly-inclining means on bends" can also be used in traditional cars to improve their safety in curves. The anti-rolling system can also equip off-road vehicle.

The direction of the "Four-wheeled Motor Vehicle with inwardly-inclining means on bends" is given by a common bar as normally used on motorcycles. The same bar can also be inclined to lean the vehicle either to the left or to the right. The leaning of the vehicle could also be controlled with pedals or other switches conveniently placed.

Driving the "Four-wheeled Motor Vehicle with inwardly-inclining means on bends" in curves would only require steering the bar in the direction of the curve. To drive in curves at higher speeds besides steering the bar it would be necessary to lean the bar itself. The amount of leaning is in the proportion to the speed an to the radius of the turn.

In the case of no pressure being exerted by the driver on the control bar the system returns to the centre position itself. The whole system described so far can also be applied to the three wheeled vehicles (either front wheel or back wheel).

This invention is preferably equipped whith an automatic gear shift, electrical system in accordance whit current road regulations, a normal handbrake, a dashboard, air conditioning and other comforts

The fore and aft shock absorbers are free from each other and of single-beam type.The fore and the aft shock absorbers are linked respectively to the fore and to the aft platform balance. Both the shock absorbers are linked through a shaft of attitude platform balance. The chassis is of single beam type. On the chassis are mounted both the attitude platform balance, joints, bearings, seats, roll bars, bumpers and engine. The transmission is an automatic type or clutch (possibly with reverse), with differentiale, semi axle-shafts and homocinetic joints. In the case of a tail wheel type version, the transimmion is of chain type or of cardan joint with reverse.

The leaning system is powered either with a hydraulic pump or elerctric generator both engine driven. In either case there is an anti block system that brings everything back to the mechanical system in case a malfunction should arise. The mechanical system consists of springs and appropriate shock absorbers.

### Brief description of drawings

The above said characteristics of this invention are self evident in the following drawing. The chosen version in the drawing is only for the purpose of giving a better view of the invention, and does not limit the invention itself to the following drawing.

### DRAWING 1/8:

Shows an axonometric view of the complete "Four Wheeled Anti-Roll Motor-Bike" in its normal position.

### DRAWING 2/8:

Also in an axonometric view, shows the "Four Wheeled Anti-Roll Motor-Bike" leaning left as it would in a tight left-hand road curve.

### DRAWING 3/8:

Side view of the vehicle in a normal position.

### DRAWING 4/8:

Plane view of the vehicle.

### DRAWING 5/8:

Frontal and rear view of the vehicle.

### DRAWING 6/8:

The same views as dr 5/8 leaning left.

### DRAWING 7/8:

An axonometric view of the chassis and mechanical interior.

### DRAWING 8/8:

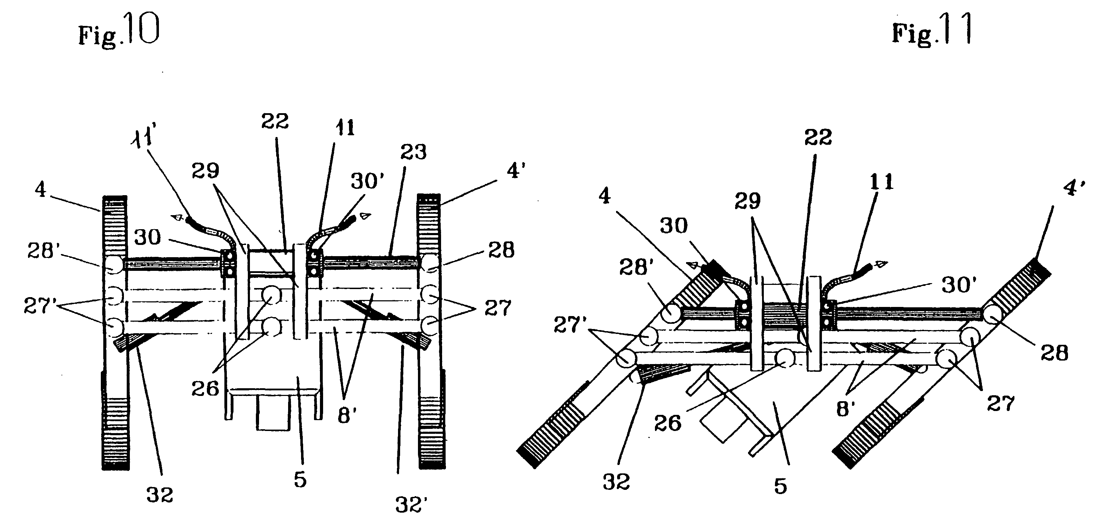

Detailed view of Fig. 10 frontal in normal position and detailed view of Fig. 11 in leaning position.

### Best mode for carryng out the invention

Using these drawings it is now possible to give a detailed description of the various components illustrated and explain the dynamics of their functions.

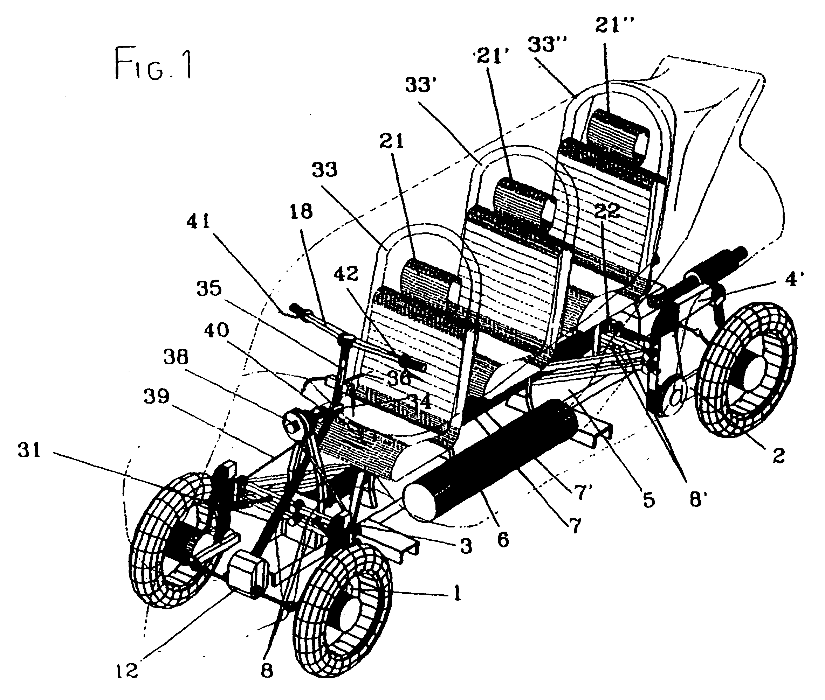

In DRAWING **1/8** -Fig.**1**: 1 indicates the oscillating bar of the front left suspension, while 2 indicates the rear oscillating bar. 3 and 4 indicate the relevant suppoits of this suspension. 5 indicates the chassis, 6 the leftside petrol tank, 7 and 7' indicate the chrome trim. 8 and 8' indicate the front and rear attitude platform balance which can be seen more clearly in the following drawings.
35, incorporated in the balance handle 18, is the hydraulic diverter which mixes the oil that goes to the hydraulic piston 22, which in turn activates the platform balance rear 8', in ordre to determine the solidity of the vehicle. 34 is crank pin that works with 18, 12 is the steering box and 21, 21' and 21" are the seats. 40 is the added homocinetic that transmits the mechanical rotation of the balance handle 18, through the crown gears 38 and the transmission chain movement 39, to the balance platform front 8 to mechanically determine the inclination of the vehicle. 33, 33' and 33" are the security roll bars. 41 is the front brake and 42 the rear brake.

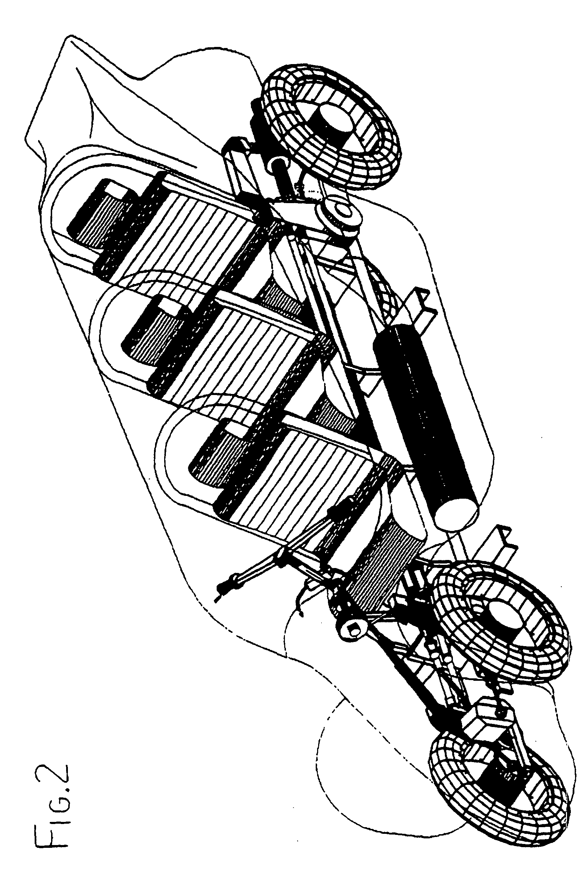

DRAWING **2/8** -Fig.**2**, shows the vehicle leaning to the left in a tight lefthand curve. This happens when the driver uses the inclination and the rotation of the balance handle 18 at the same time, (in this case on the left), to raise the inside wheels (relative to the curve) and lower the outside wheels, commanding the front wheels to follow the arc of the curve

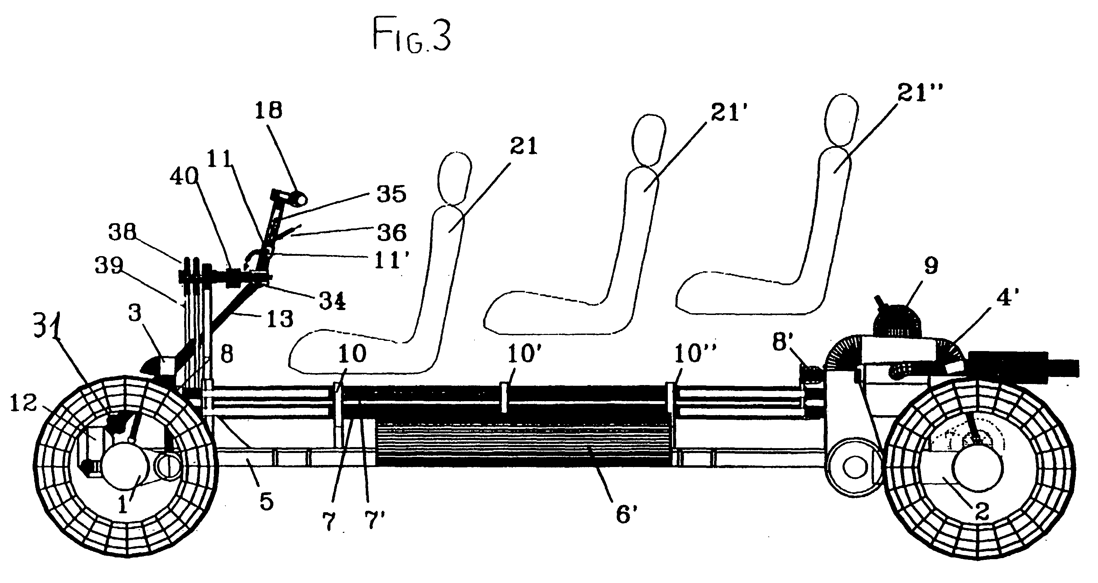

In DRAWING **3/8** -Fig.**3**: a side view of the front oscillating suspension bar is again seen 1. 2 shows the rear oscillating suspension bar, while 3 and 4' are the relative suspension supports. 5 indicates the chassis, 6 the left petrol tank, 7 and 7' the chrome trim and 8 and 8' the front and rear attitude platform balance which can be seem more clearly in the following drawings.
9 is the engine and/or propulsion; 10, 10' and 10" are the arm supports of the attitude platform balance. 11 and 11' are the oil conductors of the hydraulic diverter 35 which is incorporated in the balance handle 18. 12 indicates the steering box, 13 its pipe, 31 the cardanic joint. 21, 21' and 21" are the seats. The already seen homocinetic 40 connected to the crown gears 38 and to the chains 39 anchored to the front platform balance 8 (seen better in drawings 5/8 and 6/8) make up the secondary mechanical safety system for the inclination of the vehicle. This system is always operative, even in cases of engine or generator failure. Please note that the added homocinetic 40 is telescopic, which always the balance 18 to mechanically transmit the inclination of the vehicle.

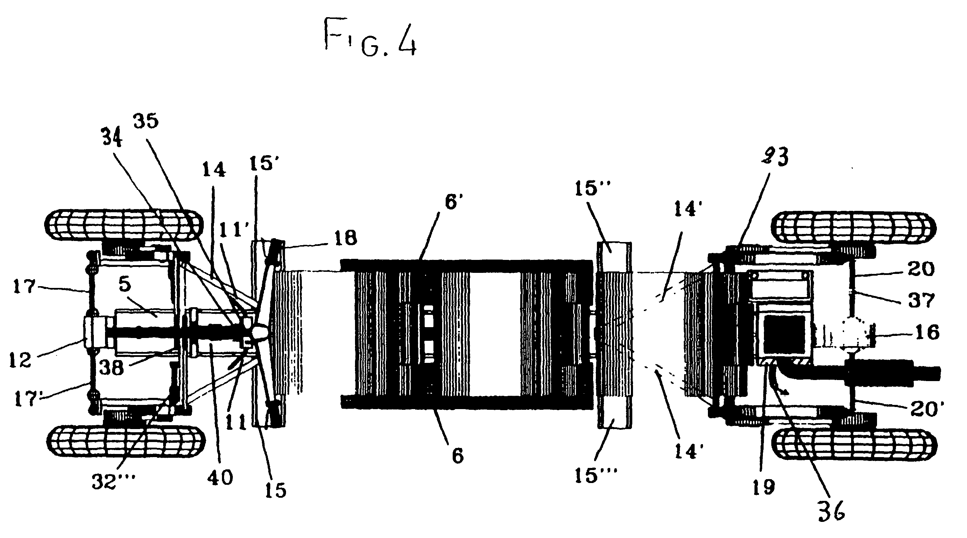

In DRAWING **4/8** -Fig.**4**: 14 and 14' indicate the platform balance windbraces that support it. 5 is the chassis and 15, 15', 15" and 15"' are the door supports that form a part of the chassis itself. 16 is the differential gear, 17 and 17' are the steering wheel connecting rods with relative round pins. 18 is the leader balance handle. 6 and 6' are petrol tanks that we have already seen in drawing 3/8. 12 indicates the steering box. 19 is the hydraulic pump which pulls the engine, suppling and maintaining hydraulic pressere. 36 is the oil pump conductor to the hydraulic diverter 35 (already seen in drawing 3/8).

The hydraulic diverter 35 which is incorporated in the balance handle 18, and depending on the handle's position, diverts the oil that flows through tubes 11 and 11' reaching the hydraulic piston 22 (visible in dr. 7/8 and 8/8) which is anchored to the rear platform balance 8' to determine hydraulically the inclination of the vehicle to the left or right. The hydraulic system of the vehicle consists of: pump 19, conductor 36, hydraulic diverter 35 (dr.3/8), oil conductors 11 and 11', hydraulic piston 22, (dr.7/8 and 8/8), which are connected to the hydraulic beam 23 of the rear platform balance 8'. The inclination and security system of the vehicle consist of the added homocinetic 40, the crown gears 38 and the chains 39 connected to the front of the platform balance 8 (dr. 1/8). Obviously both systems are controlled by the balance handle 18 at the same time. The front and rear kinematisms (8 and 8') are connected throught the kinematism shaft, 7 and 7' (dr.3/8). Therefore the two systems control the inclination of the two kinematisms 8 and 8'. 20 and 20' are the telescopic semi axis. 37 is one of the relative homocinetic joint, and 32"' is one of the 4 shock absorbers with incorporated springs which help the centralized mechanical action of vehicle while diminishing possible oscillations.

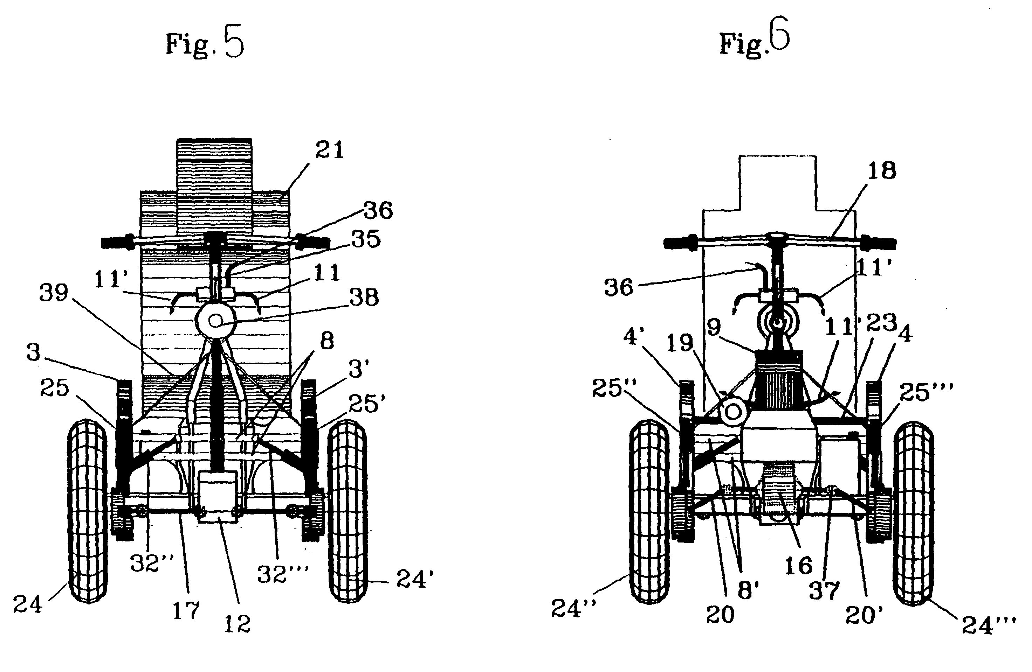

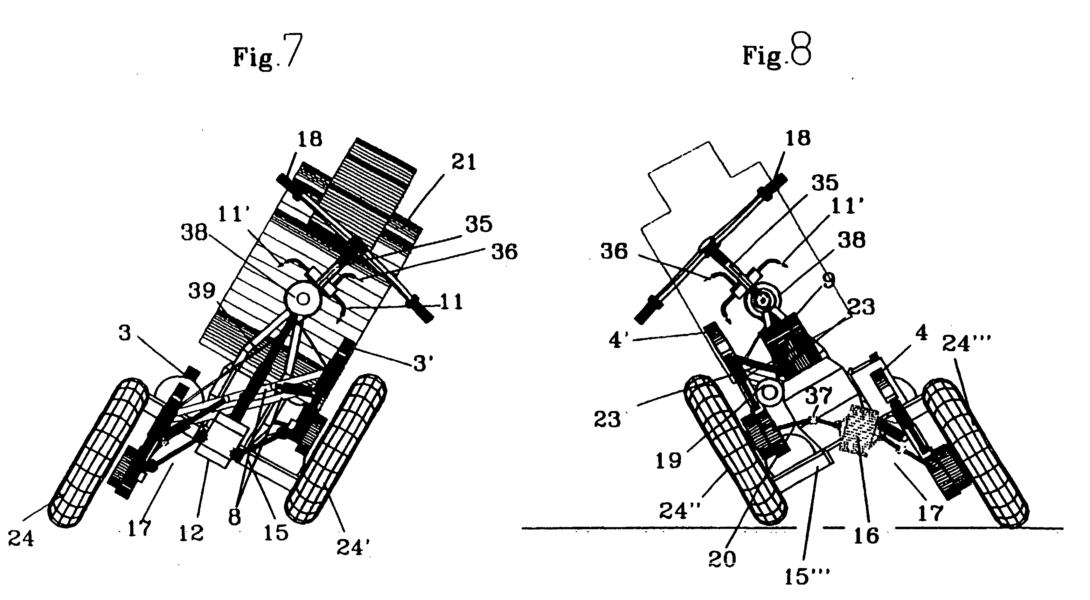

In DRAWING **5/8** -Fig.**5** represents the front view of the vehicle and Fig.**6** the rear view. 21 of fig.5 shows the driver's seats. 8 is the front of the platform balance. 18 is the balance handle. 35 is the hydraulic diverter, 24 and 24' are the front wheels and brakes, 17 is the shaft of the steering wheel, 12 is the steering box, 3 and 3' are the front suspension supports and 25 and 25' are the interior spring shock absorbes. In Fig.6, 8' shows the rear platform balance and 9 is the engine and or propulsion. 19 is the hydraulic pump and 24" and 24"' are the rear wheels and brake systems. 4 and 4' are the rear suspension supports; 16 is the differential gear and in 20 and 20' the telescopic semi axis can be seen again with the relative homocinetic joints 37 and 37'. 23 is the hydraulic piston rod of 22 (not visible in the drawing), which operates the rear platform balance. (both seen in dr. 8/8).

In DRAWING **6/8** -Fig.**7** and **8**, shows the front and rear views of "Four wheeled anti-roll Motor-Bike" (already illustrated in drawing 5/8), can be seen in a leaning position. Having received the command from control bar 18, the inside wheels to the curve have been raised, while the external wheels have been lowered, resulting in an inclination of the chassis 5 which remains solidly connected with the three seats, 21, 21' and 21". In Fig.8 the rear of the vehicle is shown. The rear suspension supports 4 and 4' actived by the poll 23 (of the hydraulic piston 22) have put the vehicle in a left leaning position. This has been executed by the up position of internal 4' and the down position of the external 4. "Making" the curve depends onturning control bar 18 in the appropriate way. The absolute independence between leaning and turning garantees the correct combination of the two commands (inclination and turning), in order to handle any situation on the road.

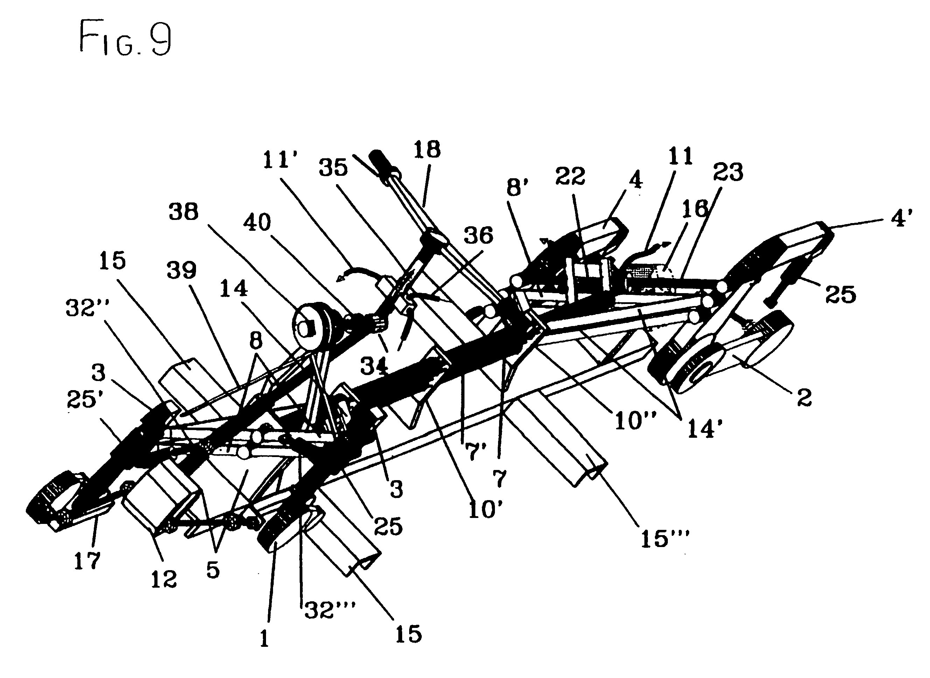

DRAWING **7/8** -Fig.**9**, shows the chassis and inside mechanism of the invention (leaning to the left). 7 and 7' are the platform balance shafts connected to the chassis 5 by bearing joints 10, 10' 10". 14 and 14' are respectively the front and rear wind braces which are connected to the kinematisms 8, 8' and the kinematisms shafts 7 and 7'.

This is to absorb the shocks caused by rough terrain and pavement. Between the wind braces and the chassis there is a safety stop to limit the leaning of the vehicle. The shock absorbers are completely independent, no matter in which direction the vehicle is leaned or the amount of leaning. The perfect syncronism between the mechanic and hydraulic leaning system. Both the systems start from the same control (control bar) 18. The mechanic leaning system goes to the front platform balance 8 by the homokinetic joint 40, crown gears 38 and the like chains 39. The hydraulic leaning system goes to the rear platform balance 8' by hydraulic oil through the shunter 35, hydraulic hoses 11, 11', hydraulic piston 22 and the pole 23. It is obvious that both the systems have the same effect because linked to each other by the kinematism shafts 7, and 7'.

DRAWING **8/8** shows the details of rear attitude platform balance. Fig.**10** represents the normal position and Fig.**11** the leaning position. The platform balance is anchored at chassis 5 by bearings 26 and oscillating arms of shock absorbes 4 and 4' by bearings 27 and 27'. The hydraulic piston 22, anchored to the oscillating arms by the hydraulic pole 23 and bearings 28 and 28', is free to move all around the chassis with an alternating vertical movement, thanks to the sliding rails 29 and their bearings 30 and 30'. The alternate vertical sliding of the hydraulic piston is necessary to compensate for the leaning of the vehicle. (Shown in Fig.10 and Fig.11). The maximum range of the hydraulic pole 23 corresponds to the maximum degree of inclination of the vehicle. 11 and 11' are the hydraulic oil lines of the regulating attitude piston that join the hydraulic switch 35. 32 and 32' are shock absorbes with internal springs with twofold purposes: the springs help the safety self-centering mechanical action and the shock absorbers help to dampen any possible oscillations of the platform balance 8 and 8'.

No matter what materials or variants in design are used to make the "Four Wheeled Anti-Roll Motor-Bike", it remains the vehicle herein described.

## Claims

1. Anti-roll-over system for four- or three-wheeled motor vehicle having a chassis, comprising:
- inclining means (7,7',8,8') adapted to be connected to the chassis (5) for relatively controlling the inclination of the wheels substantially parallel one to the other and substantially parallel to the chassis (5), and thus controlling the inclination of the vehicle with respect to the ground,
- suspension means for the vehicle adapted to resiliently connecting the wheels to the chassis (5), each one comprising at least one shock absorber (25, 25', 25", 25'''),
**characterised in that** the system comprises
- a support structure (3, 3', 4, 4') and a wheel-connecting oscillating bar (1, 2), the wheel-connecting oscillating bar (1, 2) being connected to the support structure (3, 3', 4, 4') by means of the shock-absorbers (25, 25', 25", 25'''), and
- the inclining means (7,7',8,8') being connected to the support structure (3, 3', 4, 4').

2. Anti-roll-over system according to claim 1, wherein said inclining means comprise connecting bars (8, 8') coupled through trim shafts (7, 7'), actuator means connected to the support structure (3, 3', 4, 4') and at least one shock absorbers (32, 32', 32", 32"') connected between the connecting bar (8, 8') and the support structure (3, 3', 4, 4').

3. Anti-roll-over system according to claim 2, wherein said actuator means comprise a double acting plunger (22) comprising a rod (23) jointed on the support structure (3', 4').

4. Anti-roll-over system according to claim 3, wherein an hydraulic pump (19) is connected to the double acting plunger (22) through an oil pump conductor (36), an hydraulic diverter (35) and two oil conductors (11, 11').

5. Anti-roll-over system according to claim 3, wherein said actuator means comprise at least two crown gears (38) connected to chains (39) anchored to the support structure (3, 4).

6. Anti-roll-over system according to claim 1, wherein a balance handle (18) is connected to the inclining means.

7. Anti-roll-over System according to claims 5 and 6, wherein the balance handle (18) comprises an homocynetic joint (40) connected to the crown gears (38).

8. Anti-roll-over system according to claim 2, wherein windbraces (14) are connected to one hand to the connecting bars (8) and to the other hand to the chassis (5) of the vehicle.

9. Anti-roll-over system according to any one of the preceding claims, **characterised in that** it can be applied to a three-wheeled vehicle.

10. Anti-roll-over system according to any one of claims 1 to 8, **characterised in that** it can be applied to a four-wheeled vehicle.

11. Four-wheeled motor vehicle with inwardly-inclining means on bends, comprising a chassis (5), **characterised in that** it comprises an anti-roll-over system according to any one of claims 1 to 8, and **in that** it further comprises seats (21, 21', 21") placed on the longitudinal axis of the vehicle itself.

## Patentansprüche

1. System zur Verhinderung eines Überschlagens für ein vier- oder dreirädriges Kraftfahrzeug mit einem Fahrgestell, das folgendes umfaßt:
- Schrägstellmittel (7, 7', 8, 8'), die zur Verbindung mit dem Fahrgestell (5) zur relativen Steuerung der Neigung der Räder im wesentlichen parallel zueinander und im wesentlichen parallel zum Fahrgestell (5) und somit zur Steuerung der Neigung des Fahrzeugs bezüglich des Bodens ausgeführt sind;
- Aufhängungsmittel für das Fahrzeug, die zur elastischen Verbindung der Räder mit dem Fahrgestell (5) ausgeführt sind, wobei jedes einzelne mindestens einen Stoßdämpfer (25, 25', 25'', 25'''), umfaßt;
**dadurch gekennzeichnet, daß** das System:
- eine Stützkonstruktion (3, 3', 4, 4') und einen Radverbindungsschwingarm (1, 2) umfaßt, wobei der Radverbindungsschwingarm (1, 2) mittels der Stoßdämpfer (25, 25', 25'', 25''') mit der Stützkonstruktion (3, 3', 4, 4') verbunden ist, und
- wobei die Schrägstellmittel (7, 7', 8, 8') mit der Stützkonstruktion (3, 3', 4, 4') verbunden sind.

2. System zur Verhinderung eines Überschlagens nach Anspruch 1, bei dem die Schrägstellmittel über Zierschäfte (7, 7') verbundene Verbindungsstangen (8, 8') und mit der Stützkonstruktion (3, 3', 4, 4') verbundene Betätigungsmittel und mindestens einen Stoßdämpfer (32, 32', 32'', 32''')umfassen, der zwischen der Verbindungsstange (8, 8') und der Stützkonstruktion (3, 3', 4, 4') verbunden ist.

3. System zur Verhinderung eines Überschlagens nach Anspruch 2, bei dem die Betätigungsmittel einen doppeltwirkenden Kolben (22) mit einer an der Stützkonstruktion (3', 4') befestigten Stange (23) umfassen.

4. System zur Verhinderung eines Überschlagens nach Anspruch 3, bei dem eine Hydraulikpumpe (19) über einen Ölpumpenleiter (36), eine hydraulische Umleitvorrichtung (35) und zwei Ölleiter (11, 11') mit dem doppeltwirkenden Kolben (22) verbunden ist.

5. System zur Verhinderung eines Überschlagens nach Anspruch 3, bei dem die Betätigungsmittel mindestes zwei Tellerräder (38) umfassen, die mit mit der Stützkonstruktion (3, 4) verankerten Ketten (39) verbunden sind.

6. System zur Verhinderung eines Überschlagens nach Anspruch 1, bei dem ein Ausgleichsgriff (18) mit den Schrägstellmitteln verbunden ist.

7. System zur Verhinderung eines Überschlagens nach den Ansprüchen 5 und 6, bei dem der Ausgleichsgriff (18) ein mit den Tellerrädern (38) verbundenes homokinetisches Gelenk (40) aufweist.

8. System zur Verhinderung eines Überschlagens nach Anspruch 2, bei dem Windverstrebungen (14) einerseits mit den Verbindungsstangen (8) und andererseits mit dem Fahrgestell (5) des Fahrzeugs verbunden sind.

9. System zur Verhinderung eines Überschlagens nach einem der vorhergehenden Ansprüche, **dadurch gekennzeichnet, daß** es sich auf ein dreirädriges Fahrzeug anwenden läßt.

10. System zur Verhinderung eines Überschlagens nach einem der Ansprüche 1 bis 8, **dadurch gekennzeichnet, daß** es sich auf ein vierrädriges Fahrzeug anwenden läßt.

11. Vierrädriges Kraftfahrzeug mit Mitteln zur Schrägstellung zur Innenseite in Kurven mit einem Fahrgestell (5), **dadurch gekennzeichnet, daß** es ein System zur Verhinderung eines Überschlagens nach einem der Ansprüche 1 bis 8 und weiterhin auf der Längsachse des Fahrzeugs selbst angeordnete Sitze (21, 21', 21'') umfaßt.

## Revendications

1. Système anti-retournement destiné à un véhicule à moteur à trois ou quatre roues possédant un châssis, comprenant :
un dispositif d'inclinaison (7, 7', 8, 8') destiné à être raccordé au châssis (5) pour régler l'inclinaison relative des roues qui sont pratiquement parallèles les unes aux autres et pratiquement parallèles au châssis (5) avec réglage ainsi de l'inclinaison du véhicule par rapport au sol, et
un dispositif de suspension du véhicule destiné à raccorder élastiquement les roues au châssis (5), chacune comprenant au moins un amortisseur (25, 25', 25", 25"'),
**caractérisé en ce que** le système comprend :
une structure de support (3, 3', 4, 4') et une barre oscillante de raccordement de roues (1, 2), cette barre oscillante de raccordement: de roues (1, 2) étant raccordée à la structure de support (3, 3', 4, 4') par lee amortisseurs (25, 25', 25", 25"'), et
le dispositif d'inclinaison (7, 7', 8, 8') étant raccordé à la structure de support (3, 3', 4, 4').

2. Système anti-retournement selon la revendication 1, dans lequel le dispositif d'inclinaison comprend des barres de raccordement (8, 8') couplées par des arbres de réglage (7, 7'), un dispositif à organe de manoeuvre raccordé à la structure de support (3, 3', 4, 4') et au moins un amortisseur (32, 32', 32", 32"') raccordé entre la barre de raccordement (8, 8') et la structure de support (3, 3', 4, 4').

3. Système anti-retournement selon la revendication 2, dans lequel le dispositif à organe de manoeuvre comprend un plongeur à double effet (22) ayant une tige (23) raccordée à la structure de support (3', 4').

4. Système anti-retournement selon la revendication 3, dans lequel une pompe hydraulique (19) est raccordée au plongeur à double effet (22) par un conducteur d'huile de pompe (36), un organe de deviation hydraulique (35) et deux conducteurs d'huile (11, 11').

5. Système anti-retournement selon la revendication 3, dans lequel le dispositif à organe de manoeuvre comporte au moins deux couronnes dentées (38) raccordées à des chaînes (39) fixées à la structure de support (3, 4).

6. Système anti-retournement selon la revendication 1, dans lequel une poignée d'équilibrage (18) est raccordée au dispositif d'inclinaison.

7. Système anti-retournement selon les revendications 5 et 6, dans lequel la poignée d'équilibrage (18) comprend un joint homocinétique (40) raccordé aux couronnes dentées (38).

8. Système anti-retournement selon la revendication 2, dans lequel des haubans (14) sont raccordés d'une part aux barres de raccordement (8) et d'autre part au châssis (5) du véhicule.

9. Système anti-retournement selon l'une quelconque des revendications précédentes, **caractérisé en ce qu'**il peut être appliqué à un véhicule à trois roues.

10. Système anti-retournement selon l'une quelconque des revendications 1 à 8, **caractérisé en ce qu'**il peut être appliqué à un véhicule à quatre roues.

11. Véhicule à moteur à quatre roues comprenant un dispositif d'inclinaison vers l'intérieur en virage, comportant un châasis (5), **caractérisé en ce qu'**il comprend un système anti-retournement selon l'une quelconque des revendications 1 à 8, et **en ce qu'**il comporte en outre des sièges (21, 21', 21") placés sur l'axe longitudinal du véhicule lui-même.
